# EUROPEAN PATENT APPLICATION

(11) **EP 3 796 287 A1**
(43) Date of publication of application: **24.03.2021**
(21) Application number: 20196555.5
(22) Date of filing: 16.09.2020
(51) Int. Cl.: G08G 5/00, G08G 5/02, G08G 5/04

(54) **SYSTEM AND METHOD TO MONITOR TRAFFIC AND PROVIDE ALERT IN FIM-PA POST PLANNED TERMINATION POINT**

(30) Priority: 23.09.2019 US 201916579563
(71) Applicant: Honeywell International Inc., Charlotte, NC 28202 (US)
(72) Inventor: RAB, Abdur, Charlotte, NC North Carolina 28202 (US); WALKER, Donald, Charlotte, NC North Carolina 28202 (US); MAZUMDAR, Anupam, Charlotte, NC North Carolina 28202 (US); THIRUMALAIVENJAMUR, Prashanth, Charlotte, NC North Carolina 28202 (US); V, Arivazhagan, Charlotte, NC North Carolina 28202 (US)
(74) Representative: LKGlobal UK Ltd.

(57) **Abstract**

A method in a trail aircraft for monitoring the separation distance between the trail aircraft and a lead aircraft during a flight deck interval management paired approach (FIM-PA) procedure is provided. The method includes: receiving an assigned spacing goal (ASG); receiving traffic information regarding the lead aircraft that indicates the position, heading and ground velocity of the lead aircraft; retrieving a predetermined tolerance limit and traffic information regarding the trail aircraft that indicates the position, heading and ground velocity of the trail aircraft; setting a range limit that is at least as great as the absolute limit indicated by the ASG plus the tolerance limit; monitoring the range and ground speed differential between the lead aircraft and the trail aircraft; and generating a caution alert indicator when a monitored condition detected from monitoring the range and ground speed differential indicates a potential problem.

## Description

### TECHNICAL FIELD

Embodiments of the subject matter described herein relate generally to aircraft monitoring and alerting systems. More particularly, embodiments of the subject matter relate to systems and methods for monitoring aircraft during a flight deck interval management - paired approach procedure.

### BACKGROUND

The Flight Deck Interval Management - Paired Approach (FIM-PA) procedure is a cooperative procedure enabling dependent approaches to Closely Spaced Parallel Runways (CSPR) in Instrument Meteorological Conditions (IMC). This procedure is performed by a trail aircraft (the IM Aircraft) following a lead (the target aircraft) in an echelon formation. The lead aircraft conducts a normal straight-in ILS (Instrument Landing System) approach. The trail aircraft flies either a 3-degree offset angle RNAV approach or a slightly higher angle glideslope approach to the parallel runway.

Air Traffic Control (ATC) will vector the aircraft to the Initial Approach Fixes (IAF) of their respective instrument approach procedure within an IM initiation time/distance tolerance. ATC issues an Assigned Spacing Goal (ASG) to the IM aircraft. After crossing the IAF the IM aircraft performs a Paired Approach (PA) procedure using the Flight deck interval management (FIM) avionics application. The FIM-PA avionics computes speed guidance for the flight crew of the IM aircraft to capture and maintain the ASG until the Planned Termination Point (PTP) of the FIM-PA procedure. At the PTP, FIM-PA speed guidance is terminated. Visual separation must be used to maintain separation after crossing the PTP and until reaching the Approach minima. This can increase flight crew workload. Additionally maintaining visual separation may be difficult in low visibility situations.

Hence, it is desirable to provide an automatic way to maintain safe separation instead of relying exclusively on visual separation after crossing the PTP when performing a FIM-PA procedure. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a dependent runway traffic monitoring system on an aircraft for monitoring the separation distance between a trail aircraft and a lead aircraft during a flight deck interval management paired approach (FIM-PA) procedure is provided. The monitoring system includes one or more processors configured by programming instructions on non-transient computer readable media. The monitoring system is configured to: receive an assigned spacing goal (ASG); receive traffic information regarding the lead aircraft that indicates the position, heading and ground velocity of the lead aircraft; retrieve a predetermined tolerance limit and traffic information regarding the trail aircraft that indicates the position, heading and ground velocity of the trail aircraft; set a range limit that is at least as great as the absolute limit indicated by the ASG plus the tolerance limit; monitor the range and ground speed differential between the lead aircraft and the trail aircraft; and generate a caution alert indicator when a monitored condition detected from monitoring the range and ground speed differential indicates a potential problem.

In another embodiment, a method in a trail aircraft for monitoring the separation distance between the trail aircraft and a lead aircraft during a flight deck interval management paired approach (FIM-PA) procedure is provided. The method includes: receiving an assigned spacing goal (ASG); receiving traffic information regarding the lead aircraft that indicates the position, heading and ground velocity of the lead aircraft; retrieving a predetermined tolerance limit and traffic information regarding the trail aircraft that indicates the position, heading and ground velocity of the trail aircraft; setting a range limit that is at least as great as the absolute limit indicated by the ASG plus the tolerance limit; monitoring the range and ground speed differential between the lead aircraft and the trail aircraft; and generating a caution alert indicator when a monitored condition detected from monitoring the range and ground speed differential indicates a potential problem.

In another embodiment, non-transient computer readable media encoded with programming instructions that when executed by one or more processors in a target aircraft causes the target aircraft to perform a method for monitoring the separation distance between a trail aircraft and a lead aircraft during a flight deck interval management paired approach (FIM-PA) procedure, the method including: receiving an assigned spacing goal (ASG); receiving traffic information regarding the lead aircraft that indicates the position, heading and ground velocity of the lead aircraft; retrieving a predetermined tolerance limit and traffic information regarding the trail aircraft that indicates the position, heading and ground velocity of the trail aircraft; setting a range limit that is at least as great as the absolute limit indicated by the ASG plus the tolerance limit; monitoring the range and ground speed differential between the lead aircraft and the trail aircraft; and generating a caution alert indicator when a monitored condition detected from monitoring the range and ground speed differential indicates a potential problem.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a diagram depicting an example operating scenario for the use of a dependent runway traffic monitoring system during a FIM-PA procedure, in accordance with some embodiments;
FIG. 2 is a block diagram of am example dependent runway traffic monitoring system on an aircraft for monitoring the separation distance between a trail aircraft and a lead aircraft during a FIM-PA procedure, in accordance with some embodiments;
FIG. 3 is a process flow chart depicting an example process in a trail aircraft for monitoring the separation distance between the trail aircraft and a lead aircraft during a FIM-PA procedure, in accordance with some embodiments;
FIG. 4 is a diagram depicting an example FIM-PA avionics traffic display that has been enhanced with output from an example dependent runway traffic monitoring system, in accordance with some embodiments;
FIG. 5 is a diagram depicting another example FIM-PA avionics traffic display that has been enhanced with output from an example dependent runway traffic monitoring system, in accordance with some embodiments; and
FIG. 6 is a process flow chart depicting another example process in a trail aircraft for monitoring the separation distance between the trail aircraft and a lead aircraft during a FIM-PA procedure, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

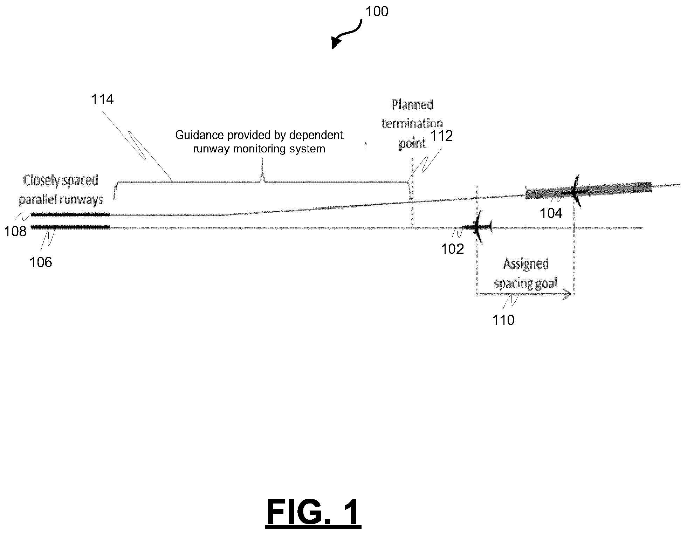

The subject matter described herein discloses apparatus, systems, techniques and articles for providing better situational awareness during the performance of a flight deck interval management paired approach (FIM-PA) procedure and improving the safety and efficiency of the FIM-PA operation. FIG. 1 is a diagram depicting an example operating scenario 100 for the use of a dependent runway traffic monitoring system during a FIM-PA procedure. In a FIM-PA procedure, a target or lead aircraft 102 is followed by a trail aircraft 104. The target 102 and trail aircraft 104 are scheduled to land on closely spaced parallel runways (CSPR) 106, 108. The trail aircraft 104 is assigned an assigned spacing goal (ASG) 110 by air traffic control (ATC), which is to be followed during the FIM-PA procedure.

The FIM-PA procedure is a cooperative procedure enabling dependent approaches to CSPR in Instrument Meteorological Conditions (IMC). This procedure is performed by the trail aircraft 104 (the IM Aircraft) following a lead 102 (the target aircraft) in an echelon formation. The lead aircraft 102 may conduct a straight-in ILS (Instrument Landing System) approach and the trail aircraft 104 may fly a 3-degree offset angle RNAV approach or a slightly higher angle glideslope approach to the parallel runway 108.

ATC will vector the aircraft to the Initial Approach Fixes (IAF) of their respective instrument approach procedure within an IM initiation time/distance tolerance. ATC will issue a required ASG 110 to the IM aircraft 104. After crossing the IAF the IM aircraft 104 performs a paired approach (PA) procedure using a flight deck interval management (FIM) avionics application. The FIM-PA procedure can leverage ADS-B (automatic dependent surveillance-broadcast) in/out surveillance to manage spacing of the IM aircraft 104. The FIM-PA avionics can provide speed guidance for the flight crew of the IM aircraft 104 to capture and maintain the ASG until the planned termination point 112 (PTP) of the FIM-PA procedure. At the PTP 112, FIM-PA speed guidance is terminated. A dependent runway traffic monitoring system onboard the trail aircraft 104 can provide guidance to the flight crew before and after the trail aircraft 104 reaches the PTP 112.

After passing the PTP 112 (*e.g.,* while in area 114), the flight crew of IM aircraft 104 may use the information provided by the dependent runway traffic monitoring system to continue maintaining safe spacing until landing or visual acquisition of the lead traffic. The dependent runway traffic monitoring system provides the digital range and ground speed differential of the lead aircraft in the primary field of view. The dependent runway traffic monitoring system computes a range limit based on the entered ASG and provides an advisory if this range is reached. If the range decreases below the minimum limit, then a caution alert is issued and the crew may perform an appropriate contingency procedure.

The dependent runway traffic monitoring system can reduce pilot work load during a FIM-PA procedure and may potentially prevent the flight crew from performing a contingency procedure such as a go-around or aborting the landing. dependent runway traffic monitoring system may use an existing FIM-PA avionics traffic display to issue the required alerts and advisories. This can reduce the cost of implementing the system.

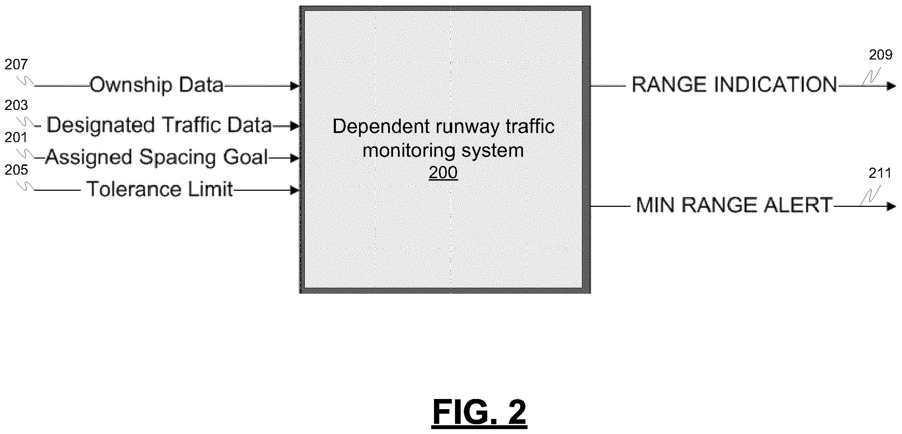

FIG. 2 is a block diagram of am example dependent runway traffic monitoring system 200 on an aircraft for monitoring the separation distance between a trail aircraft and a lead aircraft during a FIM-PA procedure. The example monitoring system 200 is implemented via a controller. The controller includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The example monitoring system 200 is configured to receive an assigned spacing goal (ASG) 201. The ASG 201, in this example, is received from air traffic control (ATC).

The example monitoring system 200 is configured to receive traffic information 203 regarding the lead aircraft. The lead aircraft traffic information 203 indicates the position, heading and ground velocity of the lead aircraft. The example monitoring system 200 is configured to receive the traffic information from the lead aircraft via a device that enables aircraft to aircraft communication, such as an ADS-B out broadcast from the lead aircraft.

The example monitoring system 200 is configured to retrieve a predetermined tolerance limit 205. The predetermined tolerance limit may be determined by flight crew preferences, airline policy, or airport policy, among others. The predetermined tolerance limit may be retrieved from onboard the ownship or from an outside source.

The example monitoring system 200 is configured to retrieve traffic information 207 regarding the ownship, *i.e.,* the trail aircraft. The trail aircraft traffic information 207 indicates the position, heading and ground velocity of the trail aircraft (ownship).

The example monitoring system 200 is configured to output a range indication 209 that indicates the range between the target aircraft and the trail aircraft. The range indication 209 may be displayed on a FIM-PA avionics traffic display in the cockpit of the trail aircraft for flight crew review.

The example monitoring system 200 is configured to generate and output a caution alert indicator 211 when a monitored condition detected from monitoring the range and ground speed differential indicates a potential problem. To generate the caution alert indicator 211, the example monitoring system 200 is configured to monitor the range and ground speed differential between the lead aircraft and the trail aircraft, set a range limit that is greater than the absolute limit indicated by the ASG wherein the range limit is set as the minimum boundary limit for the trail aircraft to maintain a required safe separation from the lead aircraft, and generate the caution alert indicator 211 when a monitored condition detected from monitoring the range and ground speed differential indicates a potential problem. The range limit is set to be at least as great as the ASG plus the predetermined tolerance limit. To monitor the range and ground speed differential between the lead aircraft and the trail aircraft, the example monitoring system 200 may be configured to compute a digital range and ground speed differential between the lead aircraft and the trail aircraft using the lead aircraft traffic information and trail aircraft traffic information.

The caution alert indicator may include an aural and/or visual caution alert indicator. The example monitoring system 200 may be configured to cause the visual caution alert indicator to be displayed on a FIM-PA avionics traffic display. The example monitoring system 200 may also be configured to cause an annunciation of the aural caution alert indicator on an audio system in the trail aircraft.

The caution alert indicator may include a minimum range alert indicator that indicates that the minimum range has been reached or passed. The caution alert indicator may also include an indication that the flight path of the lead aircraft has deviated significantly from an expected flight path of the lead aircraft.

The monitored condition may indicate a potential problem when the range between the lead aircraft and trail aircraft decreases below the range limit. The monitored condition may indicate a potential problem when the flight path of the lead aircraft deviates significantly from an expected flight path of the lead aircraft. The example monitoring system 200, therefore, is configured to not only monitor the range between the lead aircraft and trail aircraft, but also monitor the flight path of the lead aircraft and indicate a problem when there is a significant deviation in the lead aircraft's expected flight path. Examples of significant deviations include approaching the wrong runway, flying in an erratic manner, and others.

The example monitoring system 200 may be further configured to cause the set range limit to be displayed in the cockpit of the trail aircraft. The example monitoring system 200 may be further configured to cause the set range limit to be displayed in the cockpit of the trail aircraft by at least the FIM-PA planned termination point. The example monitoring system 200 may be further configured to cause the set range limit to be displayed on the FIM-PA avionics traffic display in the cockpit of the trail aircraft.

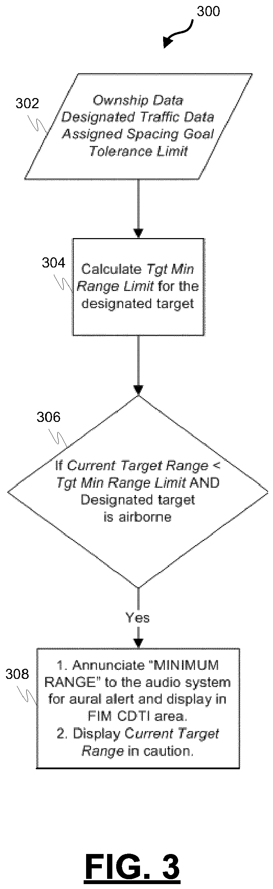

FIG. 3 is a process flow chart depicting an example process 300 in a trail aircraft for monitoring the separation distance between the trail aircraft and a lead aircraft during a FIM-PA procedure. The example process 300 includes receiving ownship data, designated traffic data, an ASG, and a tolerance limit (operation 302). The ownship data indicates the position, heading and ground velocity of the ownship. The designated traffic data indicates the position, heading and ground velocity of a lead aircraft. The traffic information may be received from the lead aircraft via a device that enables aircraft-to-aircraft communication, such as an ADS-B out broadcast from the lead aircraft. The ASG, in this example, is received from ATC. The tolerance limit may be predetermined by flight crew, airline policy, or airport policy, among others. The predetermined tolerance limit may be retrieved from onboard the ownship or from an outside source.

The example process 300 includes calculating a target minimum range limit for the designated target aircraft (operation 304). The target minimum range limit is set to be at least as great as the ASG plus the tolerance limit.

The example process 300 includes determining whether the current target range is less than the target minimum range limit and determining whether the target aircraft is airborne (decision 306). If the target aircraft is airborne and the current target range is less than the target minimum range limit (yes at decision 306), then an aural caution alert indicator is annunciated on an audio system in the trail aircraft and a visual caution alert indicator is displayed on a FIM-PA avionics traffic display (operation 308). Also, the current target range is displayed on the FIM-PA avionics traffic display as a caution indication (operation 308). If the current target range is not less than the target minimum range limit (no at decision 306), then a caution alert indicator is not enabled.

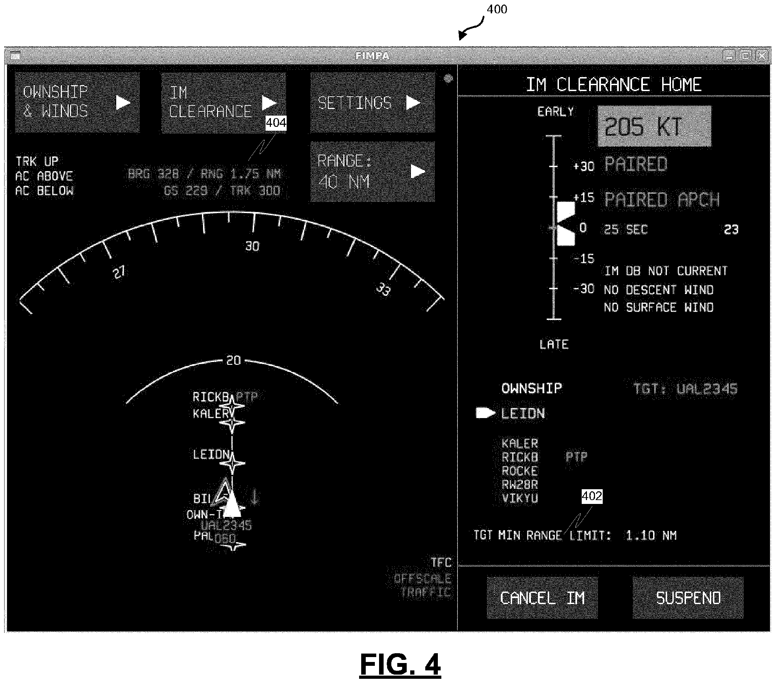

FIG. 4 is a diagram depicting an example FIM-PA avionics traffic display 400 that has been enhanced with output from an example dependent runway traffic monitoring system. The example display 400 shows the target minimum range limit 402 and the actual range 404.

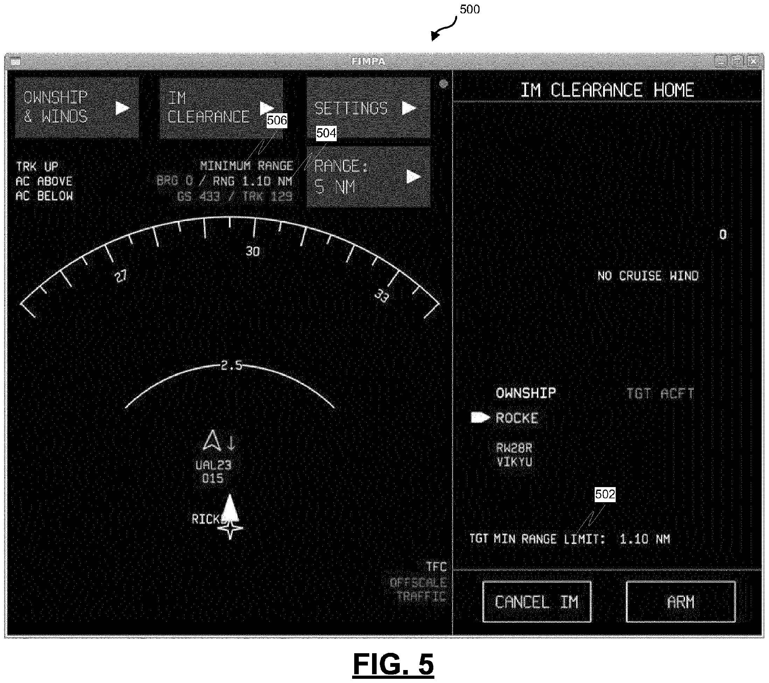

FIG. 5 is a diagram depicting another example FIM-PA avionics traffic display 500 that has been enhanced with output from an example dependent runway traffic monitoring system. The example display 500 shows the target minimum range limit 502, the actual range 504, and a visual minimum range indicator 506. For increased effect, the minimum range indicator 506 and the actual range 504 may be displayed in a color that is indicative of caution, such as yellow.

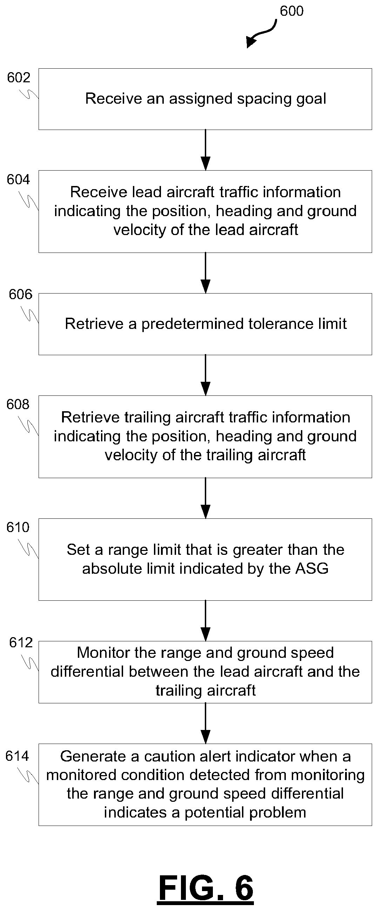

FIG. 6 is a process flow chart depicting another example process 600 in a trail aircraft for monitoring the separation distance between the trail aircraft and a lead aircraft during a FIM-PA procedure. The order of operation within the process 600 is not limited to the sequential execution as illustrated in the figure, but may be performed in one or more varying orders as applicable and in accordance with the present disclosure.

The example process 600 includes receiving an assigned spacing goal (ASG) (operation 602), for example from air traffic control (ATC). The example process 600 includes receiving lead aircraft traffic information indicating the position, heading and ground velocity of the lead aircraft (operation 604). Receiving traffic information regarding the lead aircraft may include receiving the traffic information from the lead aircraft via a device that enables aircraft-to-aircraft communication such as via an ADS-B out broadcast from the lead aircraft.

The example process 600 includes retrieving a predetermined tolerance limit (operation 606). The predetermined tolerance limit may be determined by flight crew preferences, airline policy, or airport policy, among others. The predetermined tolerance limit may be retrieved from onboard the ownship or from an outside source.

The example process 600 includes retrieving traffic information regarding the trail aircraft (operation 608). The trail aircraft traffic information may indicate the position, heading and ground velocity of the trail aircraft.

The example process 600 includes setting a range limit that is greater than the absolute limit indicated by the ASG (operation 610). The range limit is set as the minimum boundary limit for the trail aircraft to maintain a required safe separation from the lead aircraft. The set range limit may be displayed in the cockpit of the trail aircraft and may be displayed at least by the time that the trail aircraft reaches the FIM-PA planned termination point. The set range limit may be displayed on the FIM-PA avionics traffic display in the cockpit of the trail aircraft.

The example process 600 includes monitoring the range and ground speed differential between the lead aircraft and the trail aircraft (operation 612). Monitoring the range and ground speed differential between the lead aircraft and the trail aircraft may include computing a digital range and ground speed differential between the lead aircraft and the trail aircraft using the lead aircraft traffic information and trail aircraft traffic information.

The example process 600 includes generating a caution alert indicator when a monitored condition detected from monitoring the range and ground speed differential indicates a potential problem (operation 614). The caution alert indicator may include an aural and a visual caution alert indicator. The visual caution alert indicator may be displayed on a FIM-PA avionics traffic display and an annunciation of the aural caution alert indicator may be made on an audio system in the trail aircraft. The monitored condition may indicate a potential problem when the range between the lead aircraft and trail aircraft decreases below the range limit. The monitored condition may indicate a potential problem when the flight path of the lead aircraft deviates significantly from an expected flight path of the lead aircraft.

Described herein are apparatus, systems, techniques and articles for improved guidance to flight crew during the performance of a FIM-PA procedure. The apparatus, systems, techniques and articles provided herein can help improve flight crew situational awareness and improve the safety and efficiency of a flight during the performance of a FIM-PA procedure. The apparatus, systems, techniques and articles provided herein can be easily adapted to existing connectivity technologies such ADS-B protocols and data link. Flight deck interval management (FIM) display units can be upgraded to support the apparatus, systems, techniques and articles described herein. This can reduce the cost of implementing the apparatus, systems, techniques and articles described herein. The apparatus, systems, techniques and articles described herein can also be adapted into a service or as on-board advisory equipment. Because the apparatus, systems, techniques and articles described herein may also be used as advisory equipment, there may not be a need for certification. The apparatus, systems, techniques and articles described herein can be used to avoid less efficient controller-pilot interactions during the performance of a FIM-PA procedure and can be used to avoid increased separation to compensate for surveillance uncertainty.

In one embodiment, a dependent runway traffic monitoring system on an aircraft for monitoring the separation distance between a trail aircraft and a lead aircraft during a flight deck interval management paired approach (FIM-PA) procedure is provided. The monitoring system comprises one or more processors configured by programming instructions on non-transient computer readable media. The monitoring system is configured to: receive an assigned spacing goal (ASG); receive traffic information regarding the lead aircraft that indicates the position, heading and ground velocity of the lead aircraft; retrieve a predetermined tolerance limit and traffic information regarding the trail aircraft that indicates the position, heading and ground velocity of the trail aircraft; set a range limit that is at least as great as the absolute limit indicated by the ASG plus the tolerance limit; monitor the range and ground speed differential between the lead aircraft and the trail aircraft; and generate a caution alert indicator when a monitored condition detected from monitoring the range and ground speed differential indicates a potential problem.

These aspects and other embodiments may include one or more of the following features. The monitoring system may be further configured to receive the traffic information from the lead aircraft via a device that enables aircraft to aircraft communication. The monitoring system may be further configured to receive the traffic information from the lead aircraft via an ADS-B out broadcast from the lead aircraft. The monitoring system may be further configured to cause the set range limit to be displayed in the cockpit of the trail aircraft by at least the FIM-PA planned termination point. The monitoring system may be further configured to cause the set range limit to be displayed on the FIM-PA avionics traffic display in the cockpit of the trail aircraft. To monitor the range and ground speed differential between the lead aircraft and the trail aircraft, the monitoring system may be configured to compute a digital range and ground speed differential between the lead aircraft and the trail aircraft using the lead aircraft traffic information and trail aircraft traffic information. The caution alert indicator may comprise an aural and visual caution alert indicator. The monitoring system may be further configured to cause the visual caution alert indicator to be displayed on a FIM-PA avionics traffic display, and may be further configured to cause an annunciation of the aural caution alert indicator on an audio system in the trail aircraft. The monitored condition may indicate a potential problem when the range between the lead aircraft and trail aircraft decreases below the range limit. The monitored condition may indicate a potential problem when the flight path of the lead aircraft deviates significantly from an expected flight path of the lead aircraft.

In another embodiment, a method in a trail aircraft for monitoring the separation distance between the trail aircraft and a lead aircraft during a flight deck interval management paired approach (FIM-PA) procedure is provided. The method comprises: receiving an assigned spacing goal (ASG); receiving traffic information regarding the lead aircraft that indicates the position, heading and ground velocity of the lead aircraft; retrieving a predetermined tolerance limit and traffic information regarding the trail aircraft that indicates the position, heading and ground velocity of the trail aircraft; setting a range limit that is at least as great as the absolute limit indicated by the ASG plus the tolerance limit; monitoring the range and ground speed differential between the lead aircraft and the trail aircraft; and generating a caution alert indicator when a monitored condition detected from monitoring the range and ground speed differential indicates a potential problem.

These aspects and other embodiments may include one or more of the following features. Receiving traffic information regarding the lead aircraft may comprise receiving the traffic information from the lead aircraft via a device that enables aircraft to aircraft communication. Receiving traffic information regarding the lead aircraft may comprise receiving the traffic information from the lead aircraft via an ADS-B out broadcast from the lead aircraft. The method may further comprise causing the set range limit to be displayed in the cockpit of the trail aircraft by at least the FIM-PA planned termination point. The method may further comprise causing the set range limit to be displayed on the FIM-PA avionics traffic display in the cockpit of the trail aircraft. Monitoring the range and ground speed differential between the lead aircraft and the trail aircraft may comprise computing a digital range and ground speed differential between the lead aircraft and the trail aircraft using the lead aircraft traffic information and trail aircraft traffic information. The caution alert indicator may comprise an aural and visual caution alert indicator. The method may further comprise causing the visual caution alert indicator to be displayed on a FIM-PA avionics traffic display, and causing an annunciation of the aural caution alert indicator on an audio system in the trail aircraft. The monitored condition may indicate a potential problem when the range between the lead aircraft and trail aircraft decreases below the range limit. The monitored condition may indicate a potential problem when the flight path of the lead aircraft deviates significantly from an expected flight path of the lead aircraft.

In another embodiment, non-transient computer readable media encoded with programming instructions that when executed by one or more processors in a trail aircraft causes the trail aircraft to perform a method for monitoring the separation distance between the trail aircraft and a lead aircraft during a flight deck interval management paired approach (FIM-PA) procedure, the method comprising: receiving an assigned spacing goal (ASG); receiving traffic information regarding the lead aircraft that indicates the position, heading and ground velocity of the lead aircraft; retrieving a predetermined tolerance limit and traffic information regarding the trail aircraft that indicates the position, heading and ground velocity of the trail aircraft; setting a range limit that is at least as great as the absolute limit indicated by the ASG plus the tolerance limit; monitoring the range and ground speed differential between the lead aircraft and the trail aircraft; and generating a caution alert indicator when a monitored condition detected from monitoring the range and ground speed differential indicates a potential problem.

These aspects and other embodiments may include one or more of the following features. Receiving traffic information regarding the lead aircraft may comprise receiving the traffic information from the lead aircraft via a device that enables aircraft to aircraft communication. Receiving traffic information regarding the lead aircraft may comprise receiving the traffic information from the lead aircraft via an ADS-B out broadcast from the lead aircraft. The method may further comprise causing the set range limit to be displayed in the cockpit of the trail aircraft by at least the FIM-PA planned termination point. The method may further comprise causing the set range limit to be displayed on the FIM-PA avionics traffic display in the cockpit of the trail aircraft. Monitoring the range and ground speed differential between the lead aircraft and the trail aircraft may comprise computing a digital range and ground speed differential between the lead aircraft and the trail aircraft using the lead aircraft traffic information and trail aircraft traffic information. The caution alert indicator may comprise an aural and visual caution alert indicator. The method may further comprise causing the visual caution alert indicator to be displayed on a FIM-PA avionics traffic display, and causing an annunciation of the aural caution alert indicator on an audio system in the trail aircraft. The monitored condition may indicate a potential problem when the range between the lead aircraft and trail aircraft decreases below the range limit. The monitored condition may indicate a potential problem when the flight path of the lead aircraft deviates significantly from an expected flight path of the lead aircraft.

In another embodiment, a dependent runway traffic monitoring system in a trail aircraft for monitoring the separation distance between the trail aircraft and a lead aircraft during a flight deck interval management paired approach (FIM-PA) procedure is provided. The monitoring system comprises one or more processors configured by programming instructions on non-transient computer readable media. The monitoring system is configured to: receive an assigned spacing goal (ASG) from air traffic control (ATC); receive traffic information from the lead aircraft via an ADS-B out broadcast from the lead aircraft or any other device used for aircraft to aircraft communication, wherein the lead aircraft traffic information indicates the position, heading and ground velocity of the lead aircraft; retrieve a predetermined tolerance limit and traffic information from the trail aircraft that indicates the position, heading and ground velocity of the trail aircraft; compute an adjustable range limit using the ASG and adjust the range limit to be lower than the absolute limit indicated by the ASG, wherein the range limit is set as the minimum boundary limit for the trail aircraft to maintain a required safe separation from the lead aircraft; make the range limit available to be displayed on an FIM-PA avionics traffic display in the cockpit of the trail aircraft by at least the FIM-PA planned termination point; compute a digital range and ground speed differential between the lead aircraft and the trail aircraft using the lead aircraft traffic information and trail aircraft traffic information; monitor the digital range and ground speed differential between the lead aircraft and the trail aircraft and the flight path of the lead aircraft; generate an aural and visual caution alert indicator; cause the visual caution alert indicator to be displayed on the FIM-PA avionics traffic display and cause an annunciation of the aural caution alert indicator on an audio system in the trail aircraft when: the range between the lead aircraft and trail aircraft decreases below the range limit plus the predetermined tolerance, or the flight path of the lead aircraft deviates significantly from an expected flight path of the lead aircraft; wherein the flight crew can perform an appropriate contingency procedure or contact ATC upon receipt of the caution alert indicator.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A dependent runway traffic monitoring system on an aircraft for monitoring the separation distance between a trail aircraft and a lead aircraft during a flight deck interval management paired approach (FIM-PA) procedure, the monitoring system comprising one or more processors configured by programming instructions on non-transient computer readable media, the monitoring system configured to:
receive an assigned spacing goal (ASG);
receive traffic information regarding the lead aircraft that indicates the position, heading and ground velocity of the lead aircraft;
retrieve a predetermined tolerance limit and traffic information regarding the trail aircraft that indicates the position, heading and ground velocity of the trail aircraft;
set a range limit that is at least as great as the absolute limit indicated by the ASG plus the tolerance limit;
monitor the range and ground speed differential between the lead aircraft and the trail aircraft; and
generate a caution alert indicator when a monitored condition detected from monitoring the range and ground speed differential indicates a potential problem.

2. The monitoring system of claim 1, further configured to receive the traffic information from the lead aircraft via a device that enables aircraft to aircraft communication.

3. The monitoring system of claim 1, further configured to receive the traffic information from the lead aircraft via an ADS-B out broadcast from the lead aircraft.

4. The monitoring system of claim 1, further configured to cause the set range limit to be displayed in the cockpit of the trail aircraft by at least the FIM-PA planned termination point.

5. The monitoring system of claim 4, further configured to cause the set range limit to be displayed on the FIM-PA avionics traffic display in the cockpit of the trail aircraft.

6. The monitoring system of claim 1, wherein to monitor the range and ground speed differential between the lead aircraft and the trail aircraft, the monitoring system is configured to compute a digital range and ground speed differential between the lead aircraft and the trail aircraft using the lead aircraft traffic information and trail aircraft traffic information.

7. The monitoring system of claim 1, wherein the caution alert indicator comprises an aural and visual caution alert indicator.

8. The monitoring system of claim 7, further configured to cause the visual caution alert indicator to be displayed on a FIM-PA avionics traffic display, and cause an annunciation of the aural caution alert indicator on an audio system in the trail aircraft.

9. The monitoring system of claim 1, wherein the monitored condition indicates a potential problem when the range between the lead aircraft and trail aircraft decreases below the range limit or the flight path of the lead aircraft deviates significantly from an expected flight path of the lead aircraft.

10. A method in a trail aircraft for monitoring the separation distance between a trail aircraft and a lead aircraft during a flight deck interval management paired approach (FIM-PA) procedure, the method comprising:
receiving an assigned spacing goal (ASG);
receiving traffic information regarding the lead aircraft that indicates the position, heading and ground velocity of the lead aircraft;
retrieving a predetermined tolerance limit and traffic information regarding the trail aircraft that indicates the position, heading and ground velocity of the trail aircraft;
setting a range limit that is at least as great as the absolute limit indicated by the ASG plus the tolerance limit;
monitoring the range and ground speed differential between the lead aircraft and the trail aircraft; and
generating a caution alert indicator when a monitored condition detected from monitoring the range and ground speed differential indicates a potential problem.
